# EUROPEAN PATENT APPLICATION

(11) **EP 4 818 569 A1**
(43) Date of publication of application: **07.10.2026**
(21) Application number: 25168547.5
(22) Date of filing: 04.04.2025
(51) Int. Cl.: F17C 11/00, F17C 3/00

(54) **DEVICE AND METHOD FOR CONTROLLING A GASEOUS PHASE OF HYDROGEN BEING STORED IN A STORAGE VOLUME FOR HYDROGEN**

(71) Applicant: GSI Helmholtzzentrum für Schwerionenforschung GmbH, 64291 Darmstadt (DE); Max-Planck-Gesellschaft zur Förderung der Wissenschaften e.V., 80539 München (DE)
(72) Inventor: Spiller, Peter, Neu-Anspach (DE); Zobel, Nick Peter, Neu-Isenburg (DE); Blaum, Klaus, Bockenau (DE)
(74) Representative: Müller-Boré & Partner Patentanwälte PartG mbB

(57) **Abstract**

The invention relates to a device (100) for being used with a hydrogen storage container (50) and/or for controlling a gaseous phase of hydrogen (6b) being stored in the storage container (50), comprising:
- adsorption means (10) comprising adsorbent material (13), the adsorbent material (13) being configured to adsorb hydrogen; and
- temperature controlling means (20) configured to control a temperature of the adsorption means (10) and/or the adsorbent material (13).

Further, the invention relates to a storage system (200) for hydrogen, and a method for controlling a gaseous phase of hydrogen (6b) being stored in a storage volume for hydrogen.

## Description

The present invention relates to the field of hydrogen storage technology, particularly to the efficient storage and handling of hydrogen, for example in industrial applications. In particular, the present invention relates to a device for being used with a hydrogen storage container and/or for controlling a gaseous phase of hydrogen being stored in the storage container. Further, the present invention relates to a storage system for hydrogen, and a method for controlling a gaseous phase of hydrogen being stored in a storage volume for hydrogen.

Worldwide, extensive measures are being taken to protect the climate. For this purpose, international agreements such as the Paris Climate Agreement of 2015 have been concluded. In particular, the Paris Agreement has three objectives: First, the states set themselves the global goal of limiting global warming to be well below two degrees Celsius compared to the pre-industrial era, with the aim of limiting global warming to 1,5 degrees Celsius. Second, the ability to adapt to climate change should be strengthened and established as an equal goal alongside the reduction of greenhouse gas emissions. Third, financial flows should be brought into line with climate goals. With regard to the reduction of greenhouse gas emissions, the aim in the energy supply sector is to switch to alternatives to fossil fuels that have the lowest possible emission. For example, in energy production, the expansion of solar and wind energy in Germany is being promoted and driven forward. By 2030, 80% of electricity consumption is to be covered by renewable energies, primarily including wind and solar energy.

Electricity generation from solar and wind energy is subject to strong fluctuations depending on the weather conditions, time of day and season. There are currently strong fluctuations in electricity generation, which cannot cover the electricity demand in Germany for more than half of the period under review. This gap is largely closed by international electricity trading in the period under review.

In addition to international electricity trading, the energy transition requires storage technologies to cover electricity demand consistently and sufficiently. Hydrogen is proving to be a promising energy storage medium, as it can be produced almost inexhaustibly and emission-free by electrolytically splitting water into oxygen and hydrogen. With the help of fuel cells, hydrogen can also be converted into electrical energy without emissions. The emission-free combustion of hydrogen to generate energy is also possible. Both the fuel cell and the combustion process produce water as the only product.

However, between production and consumption, the growing hydrogen industry faces a problem: the storage. One litres of gasoline can store 8,8 kWh of energy. For the same amount of energy, around 3300 litres of hydrogen are needed at normal pressure and room temperature. The hydrogen economy requires storage systems with significantly higher volumetric storage densities.

A distinction is made between volumetric and gravimetric energy density. The gravimetric energy density describes the energy content of hydrogen per mass, which is 33,3 kWh/kg regardless of the type of storage. For gasoline, it is 11,5 kWh/kg. The volumetric energy density describes the energy content per volume, which in turn depends on the density of the hydrogen. The density in turn depends on the type of storage. If one looks at the entire storage system, both the gravimetric energy density and the volumetric energy density depend on the system.

To achieve higher volumetric energy densities than under normal conditions, the following processes are used industrially: Gaseous compressed hydrogen or liquid cryogenic hydrogen. To achieve higher volumetric storage densities, hydrogen is stored and transported in pressure vessels at pressures of 300 to 700 bar. Volumetric energy densities of 0,73 to 1,30 kWh/I are achieved. To achieve storage pressures of 700 bar, the hydrogen is first compressed to approximately 900 bar. A compression from 1 bar to 1000 bar requires around 2,61 kWh/kg (i.e. 8% of the energy content).

The pressure vessels, which enable storage pressures of 300 to 700 bar, cost between 40 and 150 Euros per stored kWh for use in vehicle technology. At temperatures below -252,85 °C (20,3 K), hydrogen becomes liquid at normal pressure, which is accompanied by a significant increase in density, so that the energy density of liquid hydrogen is 2,36 kWh/l. On an industrial scale, the liquefaction of hydrogen consumes 11 kWh/kg (i.e. 30% of the energy content). In its liquid state, hydrogen can be stored and transported in cryogenic containers, but due to the temperature difference between the environment and the hydrogen, heat is transferred to the hydrogen, which in turn leads to an increase in pressure in the tank if the tank is not cooled. The cryogenic container can be compared to a thermos flask, in which there is an evacuated space between an outer and inner container, the evacuated space being additionally insulated against thermal radiation by insulating material.

If the maximum pressure, which is around 5-13 bar for conventional liquid hydrogen tanks, is reached in the tank, the hydrogen must be released via a valve. This process is called "evaporation". The time until evaporation is called the "rest time" of the tank. Typical evaporation losses are between 0,3% and 3% per day, depending on the tank system. Liquid hydrogen tanks have not yet been used in commercial vehicle technology, so no price can be used to compare them with compressed gas storage. However, it should be noted that the material requirements for a 700 bar pressure tank exceed those of the liquid hydrogen tank.

Another storage method is to store hydrogen in physical or chemical compounds. Higher volumetric energy densities are achieved by binding the hydrogen to adsorbents through physical or chemical adsorption. The term adsorption generally refers to the enrichment of a fluid phase of a substance, the adsorbate, in the boundary layers of a solid substance, the adsorbent. Adsorption is based on molecular interactions between the surface of the adsorbent and the adsorbate. In this context, a differentiation between physisorption and chemisorption is relevant. In chemisorption, the adsorbed molecules undergo a chemical reaction that is accompanied by stronger binding forces than in physisorption. In contrast to chemisorption, the adsorbed molecules remain unchanged in physisorption. In addition, physisorption is not limited to a single layer of adsorbed molecules on the surface of the adsorbent.

It is an object of the present invention to improve and/or optimize the storage of hydrogen. In particular, it is an object of the invention to increase the performance and efficiency of hydrogen storage. This object is solved by the subject-matter of the independent claims. Preferred embodiments are subject to the dependent claims.

According to one aspect of the present invention, a device for being used with a hydrogen storage container and/or for controlling a gaseous phase of hydrogen being stored in the storage container is provided. The method comprises:
- adsorption means comprising adsorbent material, the adsorbent material being configured to adsorb hydrogen; and
- temperature controlling means configured to control a temperature of the adsorption means and/or the adsorbent material.

The device is particularly a control device. The term "controlling" particularly encompasses or means manipulating and/or regulating. Controlling a gaseous phase of hydrogen particularly comprises or means controlling a pressure of hydrogen in the storage container. The term "adsorbent material" is also referred to herein as "adsorbent". The device described herein is particularly usable with a storage container for liquid hydrogen. When hydrogen is stored in a storage volume and/or storage container for liquid hydrogen, the storage volume and/or container comprises both a liquid phase and a gaseous phase of hydrogen. Particularly the gaseous phase, and preferably also the liquid phase, of the hydrogen stored in the storage volume or storage container can be controlled by the device described herein.

The adsorption means may be configured to adsorb at least a portion of the hydrogen being stored in the storage volume or storage container. The adsorbent material particularly comprises or is a porous material. In particular, the adsorbent material is a granulate (adsorbent granulate). For example, the adsorbent material may comprise one or more of the following: porous carbons (e.g. active carbon), metal hydrides, metal organic frameworks (MOFs), carbon nanotubes (CNTs), zeolites, graphene (or graphene like materials), etc. Preferably, the adsorbent material (such as active carbon) is characterized in that an absolute adsorption capacity at the boiling point of hydrogen is larger than 20 mol hydrogen per kg adsorbent material. The absolute adsorption capacity of an adsorbent material (e.g. active carbon) at the boiling point of hydrogen (20,3 K at a pressure of 1 bar) refers to the total amount of hydrogen that can be adsorbed by the adsorbent material under these conditions (i.e., at 20,3 K and 1 bar). The absolute adsorption capacity is defined as: *n_{abs}* = *nₑ + ρ*_{*H*₂}*V_{ads},* wherein *nₑ* is the excess adsorption capacity, measured experimentally, *ρ*_{*H*₂} is the bulk density of hydrogen gas at the given temperature and pressure (i.e., 20,3 K and 1 bar), and *V_{ads}* is the volume of the adsorbed phase within pores of the adsorbent material.

The temperature controlling means serve for controlling a temperature of the adsorption means and/or the adsorbent material. In particular, the temperature controlling means serve for cooling and/or heating the adsorption means and/or the adsorbent material.

Within the present invention, it has been found that a temperature dependence of the storage capacity of the adsorbent material can be exploited for improving and particularly controlling the storage of hydrogen. Particularly due to the temperature dependence of the storage capacity of adsorbent material, it is possible to control the gaseous phase of hydrogen stored in the hydrogen storage container, and thus a pressure in the hydrogen storage container, by means of the device described herein. For example, by using at least one device described herein in connection with a hydrogen storage container, the pressure in the hydrogen container can be kept substantially constant, at least for a certain time, even if storage conditions change. In particular, at least one device can be actively used during storage of hydrogen to reduce and/or minimize storage losses (boil-off), as well as for safety-related control and system adaptation for hydrogen extraction in dynamic situations. Hence, the performance and efficiency of hydrogen storage can advantageously be increased by the present invention. Advantageously, a maximum storage time of hydrogen can be increased. Moreover, by means of at least one device described herein, a refueling process may be speeded up, while losses during refueling may be reduced at the same time.

In a preferred embodiment, the device further comprises fixation means configured to fix the device to the storage container. The fixation means are particularly configured such that the device is fixable to the storage container in a fluid-tight manner (e.g. by using a flange connection). Preferably, the fixation means comprise a flange (or flange element). The flange preferably comprises a seal for enabling a flange connection with a complementary flange (or complementary flange element) of the storage container in a fluid-tight manner.

In a further preferred embodiment, the fixation means are configured and/or arranged such that, in a fixed position, the adsorption means are arranged within a storage volume of the storage container.

In a further preferred embodiment, the adsorption means comprise a plurality of heat-conducting panels. Within the present description, the term "heat-conducting" particularly means a heat conductivity of at least 10 W/(m·K), preferably of at least 50 W/(m·K), more preferably of at least 100 W/(m·K), more preferably of at least 200 W/(m·K), more preferably of at least 300 W/(m·K), and particularly of at least 380 W/(m·K), at a temperature of 0° Celsius. In particular, the adsorbent material is arranged on one or more surfaces of the panels and/or in one or more spaces between adjacent panels. The heat-conducting panels may be coupled with the temperature controlling means or at least with one or more parts of the temperature controlling means, particularly with one or more cooling pipes and/or one or more cold heads. In particular, the panels are arranged such that a temperature of the adsorption means and/or the adsorbent material can be adjusted and/or controlled by means of the temperature controlling means, particularly by means of at least one cooling pipe and/or at least one cold head of the temperature controlling means.

In a further preferred embodiment, the adsorbent material is fixed, particularly glued (e.g. by means of epoxy resin), on one or more surfaces of the panels. Alternatively or in addition, the adsorbent material is arranged in one or more spaces, each of which is defined by a heat-conducting mesh that connects two adjacent panels. In other words, the adsorbent material may be arranged in one or more mesh boxes (grid boxes). In particular, a mesh box may be defined or formed by two adjacent panels and a mesh that connects the two adjacent panels. Like the panels, also the mesh is preferably made of copper. The mesh and/or the at least one mesh box may have a mesh size (particularly mesh width) in the millimetre to centimetre range.

In a further preferred embodiment, the temperature controlling means comprise at least one cooling pipe configured to receive and/or transport one or more coolants. The at least one cooling pipe may be made of copper. The at least one coolant may be a gas or a liquid or both. For example, the one or more coolants may comprise or be one or more of the following: helium (gaseous and/or liquid), hydrogen (gaseous and/or liquid), nitrogen (liquid), neon (liquid), krypton (liquid), argon (liquid), oxygen (liquid), water vapor, air, carbon dioxide, etc. The temperature range of the at least one coolant may be between 4 K and 300 K. Alternatively or in addition, the temperature controlling means may comprise at least one cold head. Thus, alternatively or in addition of using a hydraulic system that circulates a coolant to cool the adsorbent means and, particularly, the adsorbent material itself, the entire control unit mount, and particularly the adsorbent means and/or the adsorbent material, can be cooled by thermal conduction, e.g., with one or more cold heads that is/are in thermal contact with the adsorbent means and/or the adsorbent material.

In particular, the panels may be arranged along the cooling pipe of the temperature controlling means and being spaced apart from each other. Each of the plurality of panels may surround a corresponding portion of the cooling pipe. For example, each of the panels may be formed as a disk having a central hole through which the cooling pipe can pass. In other words, the panels may be arranged such that the cooling pipe passes through the holes of the panels. The panels may be spaced apart from each other by a distinct distance (particularly in the millimetre to centimetre range). In particular, a thickness of a panel may be in the millimetre to centimetre range. For example, the cooling pipe may have a length in the centimetre to metre range and a diameter in the centimetre range.

In a further preferred embodiment, the temperature controlling means comprise at least one for controlling a flow rate of a coolant. For example, the temperature controlling means may comprise at least two valves and particularly exact two valves, namely an input valve and an output valve.

In a further preferred embodiment, the temperature controlling means comprise at least one heater (e.g. a heating cartridge) that is configured and arranged to heat the adsorption means and/or the adsorbent material. In particular, the at least one heater may comprise or be an electrical heater. One or more (particularly all) of the at least one heater may be arranged outside of the storage container to heat the coolant. Alternatively or in addition, one or more (particularly all) of the at least one heater may be arranged within the storage volume or storage container. For example, for each of the at least one cooling pipe, an associated heater may be provided. The heater may be arranged at or in the vicinity of the associated cooling pipe. Preferably, the heater is in thermal contact with the associated cooling pipe. For example, a heater (particularly a heating cartridge) may be arranged at a supply portion of an associated cooling pipe. The supply portion of the cooling pipe is also referred to herein as supply line or supply header, while a return portion of the cooling pipe is also referred to herein as return line or return header. Since the coolant (e.g. liquid helium) can evaporate completely during the first cooling, the return line has preferably a larger cross-section than the supply line.

According to a further aspect of the present invention, a storage system for hydrogen is provided. The system comprises:
- a hydrogen storage container; and
- at least one device according to the present invention.

The hydrogen storage container (or tank) may be a conventional hydrogen storage container (also referred to as hydrogen tank). Particularly, the hydrogen storage container is a liquid hydrogen storage container configured for storing liquid hydrogen. The hydrogen storage container may be a cryotank. In particular, the hydrogen storage container may comprise an outer container, an inner container, and an insulation for preventing the passage of heat, particularly a super-insulation (e.g. by means of vacuum and/or multi-layers) between the inner container and the outer container. In other words, the hydrogen storage container may be super-insulated (against heat introduction from the environment). For example, the hydrogen storage container may comprise a mounting (particularly a hanger assembly or a suspension rods assembly) for mounting an inner container to an outer container (e.g. by using mounting means having a low heat conductivity). Alternatively or in addition, the hydrogen storage container may comprise a thermal shield.

In a preferred embodiment, the at least one device is fixable or fixed to the storage container, such that the adsorption means (particularly the panels and/or the adsorbent material of the adsorption means) are arranged within a storage volume of the storage container. In particular, the at least one device is fixable or fixed to the storage container, such that the adsorption means (particularly the panels and/or the adsorbent material of the adsorption means) are in contact with hydrogen present in the storage volume. Particularly, the at least one device is fixable or fixed to the storage container in a fluid-tight manner, e.g. by using a flange connection. Thus, the hydrogen storage container particularly has an access or opening (from an outer wall to the storage volume) through which the adsorption means of the at least one device can be arranged in the storage volume. The hydrogen storage container may also have complementary connection means to which connection means of the at least one device can be connected.

In particular, the system and/or the hydrogen storage container may comprise a filling level sensor. Depending on a filling level of liquid hydrogen, the adsorption means, and particularly the panels with adsorbent material, may be in contact with hydrogen gas and/or with liquid hydrogen. Thus, for controlling the gaseous phase, it is advantageous to know, whether the panels are in contact with hydrogen gas or with hydrogen liquid within the storage volume. Each of the at least one device may be actuated and/or controlled (e.g. by cooling and/or heating the adsorption means and/or the adsorbent material) based on the filling level of liquid hydrogen.

In a further preferred embodiment, each of the temperature controlling means of the least one device comprises at least one valve for controlling a flow rate of a coolant. In particular, the at least one device is fixable or fixed to the storage container such that the at least one valve is arranged outside of the storage container.

In a further preferred embodiment, the storage system comprises at least two (e.g. two, three, four, five, six, etc.) or a plurality of devices according to the present invention.

The storage system may further comprise a processor, wherein particularly the temperature controlling means are controlled by the processor. In case that the storage system comprises at least two devices according to the present invention, the temperature controlling means of the at least two devices are preferably controlled by one and the same processor (i.e. by one common processor).

According to a further aspect of the present invention, a method for controlling a gaseous phase of hydrogen being stored in a storage volume for hydrogen is provided. The method comprises the following step:
- setting a temperature of adsorbent material, the adsorbent material being arranged within the storage volume and configured to adsorb hydrogen.

In a preferred embodiment, the method comprises:
- providing a storage system according to the present invention; and
- for each of the at least one device of the storage system, setting a temperature of the adsorbent material by means of the temperature controlling means.

In a further preferred embodiment, the method comprises prior to the temperature setting step:
- fixing, particularly by means of at least one flange connection, the at least one device to the storage container, particularly in a fluid-tight manner, such that the adsorption means (particularly the panels and/or the adsorbent material) of the at least one device are arranged within the storage volume, and/or particularly such that the adsorption means are in contact with hydrogen present in the storage volume.

For the above mentioned further independent aspects and in particular for preferred embodiments in this regard, the explanations given above or below concerning the embodiments of any of the other aspects also hold true. In particular, for one independent aspect of the present invention and for preferred embodiments in this regard, the explanations given above and below concerning the embodiments of the respective other aspects also hold true.

Individual embodiments for solving the problem are described by way of example below with reference to the figures. In this case, the individual embodiments described have in part features which are not absolutely necessary for implementing the claimed subject matter, but which provide desired properties in specific applications. In this respect, embodiments which do not have all the features of the embodiments described below are also intended to be regarded as disclosed in a manner falling under the technical teaching described. Furthermore, in order to avoid unnecessary repetitions, specific features are mentioned only with regard to individual embodiments from among the embodiments described below. It is pointed out that the individual embodiments are therefore intended to be considered not only by themselves but also in a joint consideration. On the basis of this joint consideration, the person skilled in the art will recognize that individual embodiments can also be modified by inclusion of individual or a plurality of features of other embodiments. It is pointed out that a systematic combination of the individual embodiments with individual or a plurality of features described in view of other embodiments may be desirable and expedient and is therefore intended to be taken into account and also to be regarded as encompassed by the description.

### Brief description of the figures

The above and other objects, features and advantages of the present invention will become more apparent upon reading the following description of preferred embodiments and accompanying drawings. Other features and advantages of the subject-matter described herein will be apparent from the description and the drawings and from the claims. It should be understood that even though embodiments are separately described, single features and functionalities thereof may be combined without prejudice to additional embodiments. The present disclosure is illustrated by way of example and not limited by the accompanying figures.

Preferred embodiments of the present invention are exemplarily described regarding the following figures:
- **Fig. 1a**: shows a schematic representation of a device 100 according to an exemplary embodiment of the present invention in a side view;
- **Fig. 1b**: shows a schematic representation of a device 100 according to a further exemplary embodiment of the present invention in a side view;
- **Fig. 1c**: shows a schematic representation of a device 100 according to an exemplary embodiment of the present invention in a top view;
- **Fig. 2a**: shows a schematic representation of a detail of a device 100 according to a first exemplary embodiment of the present invention in a side view;
- **Fig. 2b**: shows a schematic representation of a detail of a device 100 according to a second exemplary embodiment of the present invention in a side view;
- **Fig. 2c**: shows a schematic representation of a further detail of a device 100 according to the second exemplary embodiment of the present invention in a side view;
- **Fig. 3**: shows a schematic representation of a device 100 according to another exemplary embodiment of the present invention in a side view;
- **Fig. 4a**: shows a schematic representation of a device 100 according to another exemplary embodiment of the present invention in a top view;
- **Fig. 4b**: shows a schematic representation of a device 100 according to another exemplary embodiment of the present invention in a top view;
- **Fig. 4c**: shows a schematic representation of a device 100 according to the exemplary embodiment of Fig. 4b in a perspective view;
- **Fig. 5a**: shows a schematic representation of a storage system 200 according to an exemplary embodiment of the present invention in a side view;
- **Fig. 5b**: shows a schematic representation of a storage system 200 according to another exemplary embodiment of the present invention in a side view;
- **Fig. 6a**: shows a schematic representation of a storage system 200 according to a further exemplary embodiment of the present invention in a side view;
- **Fig. 6b**: shows a schematic representation of a storage system 200 according to a further exemplary embodiment of the present invention in a side view;
- **Fig. 7**: shows a schematic representation of a storage system 200 according to another exemplary embodiment of the present invention in a side view;
- **Fig. 8**: shows a simulation of the liquid hydrogen content in dependence on heat input in a 1 m³ hydrogen storage volume for different amounts of adsorbent material present in the hydrogen storage volume.

### Detailed description of the figures

The following detailed description relates to exemplary embodiments of the present invention. Other embodiments of the invention are possible within the scope of the invention as defined by the appended claims. Throughout the figures, same reference signs are used for the same or similar elements.

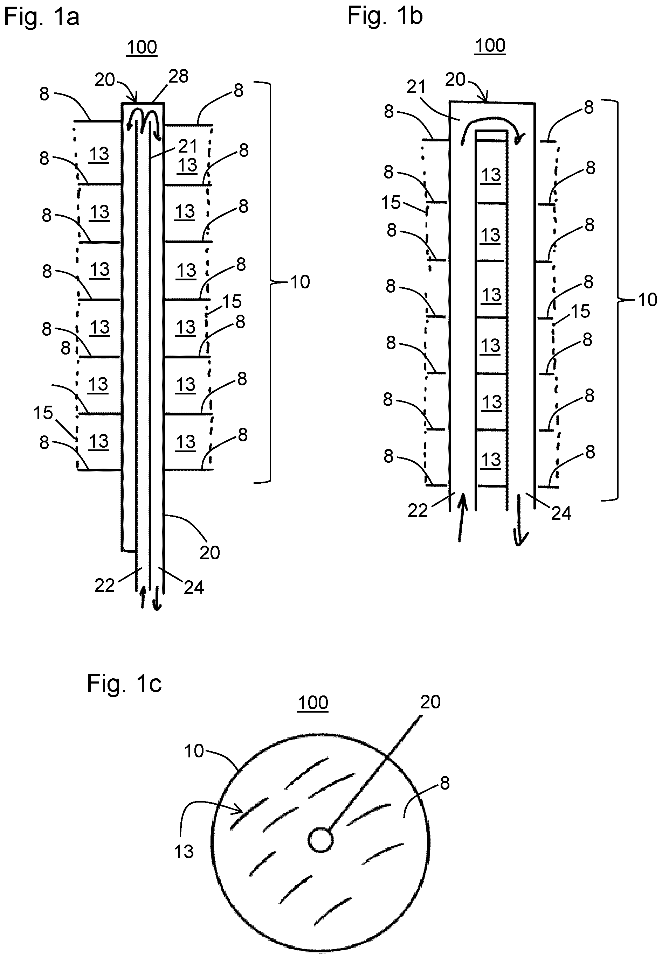

**Fig. 1a** shows a schematic representation of a device 100 according to an exemplary embodiment of the present invention. The device 100 is intended for being used with a hydrogen storage container (not shown in Fig. 1a). By means of the device 100, a gaseous phase of hydrogen (and particularly a pressure of hydrogen gas), which is stored in a storage container can be controlled. The device 100 comprises adsorption means 10 and temperature controlling means 20. The temperature controlling means 20 are configured to control a temperature of the adsorption means 10. In the embodiment of Fig. 1a, the temperature controlling means 20 comprises a central cooling pipe 21 for transporting a coolant. The temperature controlling means 20 have a supply line 22 for introducing the coolant to the cooling pipe 21 and a return line 24 for returning the coolant from the colling pipe 21. According to the example of Fig. 1a, the cooling pipe 21 is an inner cooling pipe and arranged within an outer cooling pipe 28. This means that only one valve (not explicitly shown in Fig. 1a) is needed to direct the coolant through a cooling system or coolant circuit (which comprises the cooling pipes 21 and 28). The cooling system or coolant circuit serves for the flow and return of the coolant. In particular, the coolant circulates through the cooling system or coolant circuit. The cooling system or coolant circuit may be part of the device 100. As illustrated by the arrows in Fig. 1a, after exiting the inner colling pipe 21, the coolant flows in different directions within the outer cooling pipe 28. Thin heat-conducting plates or panels 8 are attached to the temperature controlling means 20, particularly to the inner cooling pipe 21 and/or outer cooling pipe 28. Adsorbent material 13 is arranged in a space defined by a heat-conducting mesh 15 that connects two adjacent panels 8.

**Fig. 1b** shows a schematic representation of a device 100 according to another exemplary embodiment of the present invention. This embodiment differs from the embodiment of Fig. 1a in that the temperature controlling means 20 comprise one cooling pipe 21 through which a coolant flows from the supply line 22 to the return line 24. Thus, in the embodiment of Fig. 1b, the coolant only flows in one direction through cooling pipe 21. Similar to the embodiment of Fig. 1a, thin heat-conducting plates or panels 8 are attached to the temperature controlling means 20, particularly to the cooling pipe 21. Adsorbent material 13 is arranged in a space defined by a heat-conducting mesh 15 that connects two adjacent panels 8.

In both embodiments shown in Fig. 1a and Fig. 1b, the temperature controlling means 22 may further comprise a pump (not shown in Fig. 1a and 1b) for enabling a transportation of the coolant in the cooling pipe 21 (and/or cooling pipe 28) and/or for enabling a circulation of the coolant through the coolant circuit. In both embodiments shown in Fig. 1a and Fig. 1b, the adsorption means 10 comprise a plurality of heat-conducting panels 8 and adsorbent material 13 configured to adsorb hydrogen. The adsorbent material 13 is arranged on one or more surfaces of the panels 8 and/or in spaces between two adjacent panels 8. The device 100 may comprise mounting means (such as screws, washers, etc.) for mounting and/or fixing the panels 8 to the temperature controlling means 10. The heat-conducting panels 8 are mounted to the temperature controlling means 10 so that the panels 8 are coupled with the temperature controlling means 10, particularly in a heat-conducting manner. The panels 8 are arranged substantially parallel and spaced apart from each other. The panels 8 are arranged such that a temperature of the adsorption means 10 (and thus the adsorbent material 13) can be controlled by means of the temperature controlling means 20.

A top view of the device 100 according to an exemplary embodiment of the present invention is illustrated in **Fig. 1c****.** According to this embodiment, the adsorption means 10 of the device 100 comprise one or more panels 8 with a circular cross section. In particular, the one or more panels 8 are circular plates or disks, e.g. made of copper or any other material with a high heat conductivity. As shown in the embodiment of Fig. 1c, each of the panels 8 has a central hole through which the temperature controlling means 20 and/or the cooling pipe 21 and cooling pipe 28 shown in Fig. 1a can pass. In view of the embodiment shown in Fig. 1b, each of the panels 8 may have two holes through which the temperature controlling means 20 and/or the cooling pipe 21 shown in Fig. 1b can pass. It is to be understood that depending on the design of the temperature controlling means 20, each of the panels 8 may have a plurality of holes through which the temperature controlling means 20 and/or corresponding cooling pipes can pass.

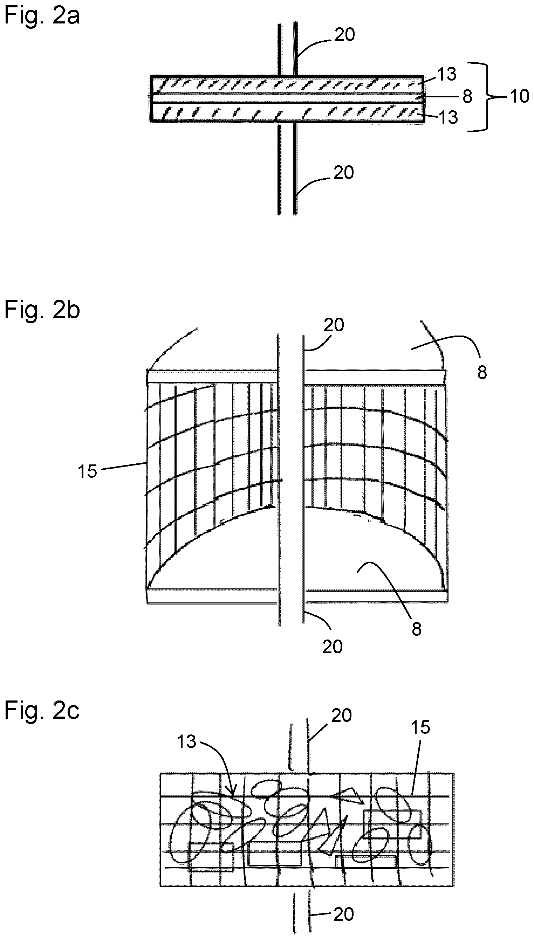

**Figs. 2a to 2b** show schematic representations of details of a device 100 according to exemplary embodiments of the present invention. According to the embodiment illustrated in **Fig. 2a****,** the adsorbent material 13 is fixed, particularly glued (e.g. by means of epoxy resin), on one or more surfaces of each panel 8. In the embodiment shown, both sides or surfaces of the panel 8 are covered by adsorbent material 13. In Fig. 2a only one panel 8 with adsorbent material 13 is shown. However, as illustrated, for example, in Fig. 1a, it is to be understood that the device 100 may comprise a plurality of these panels 8 with adsorbent material 13. According to the embodiment illustrated in **Fig. 2b****,** the adsorbent material 13 is arranged in a space defined by a heat-conducting mesh 15 (or mesh box) that connects two adjacent panels 8. Like the panels 8, also the mesh 15 (or mesh box) may be made of copper or any other heat-conducting material (having a high heat conductivity). As further illustrated in **Fig. 2c****,** the adsorbent material 13 is arranged in a space between the temperature controlling means 20 (particularly a cooling pipe of the temperature controlling means 20) and a mesh 15. The mesh 15 is arranged such that the mesh 15 forms a mesh box which is arranged between two adjacent panels 8. Although only one such mesh box is shown in Figs. 2b and 2c, it is to be understood that the device 100 may comprise a plurality of mesh boxes. Each mesh box may be arranged between two adjacent panels 8. Adsorbent material 13 may be arranged in each mesh box, e.g. as a granulate.

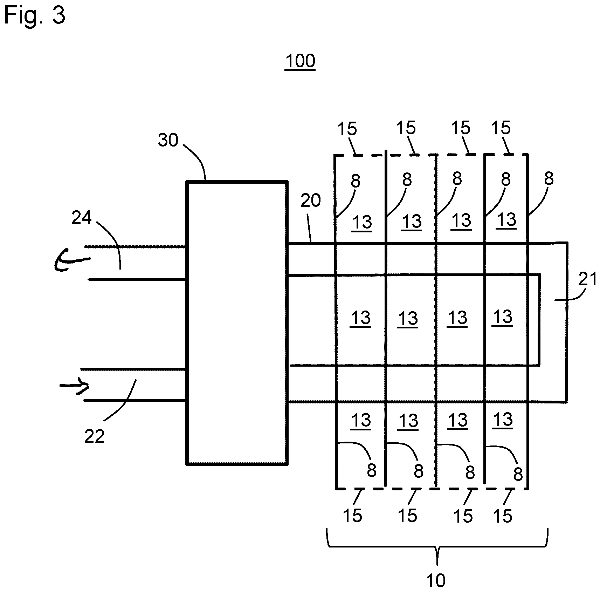

**Fig. 3** shows a further schematic representation of a device 100 according to an exemplary embodiment of the present invention. Apart from the adsorption means 10 which comprise a plurality of heat-conducting panels 8 and the temperature controlling means 20 which comprise a cooling pipe 21, a supply line 22 and a return line 24, the device 100 further comprises fixation means 30 that are configured to fix the device 100 to a storage container (not shown in Fig. 3). The fixation means 30 may comprise or be a flange. The fixation means 30 may be configured and/or arranged such that, in a fixed position, the adsorption means 10 are arranged within a storage volume of the storage container. The embodiment shown in Fig. 3 corresponds to the embodiment shown in Fig. 1b, where the temperature controlling means 20 comprise a cooling pipe 21 through which a coolant flows from the supply line 22 to the return line 24. Adsorbent material 13 is arranged on surfaces of the panels 8 and/or in spaces between two adjacent panels 8. These spaces are defined by meshes 15 (e.g. made of copper), wherein each mesh 15 connects two adjacent panels 8.

Thus, a preferred embodiment of the present invention relates to a device or a control component 100 for liquid hydrogen storage. This component 100 comprises a central cooling pipe 21 to which copper panels 8 are attached at intervals. On these copper panels 8, there may be fixed adsorbent (e.g. glued with epoxy resin). Alternatively or in addition, a mesh 15 may be arranged between two adjacent panels 8, thereby forming a mesh box in which the adsorbent material 13 is located. These devices or components 100 may be installed individually or in groups using flange connections in a conventional storage volume for liquid hydrogen storage. The cooling pipes 21 of the components 100 may be operated from the outside of the storage volume. In particular, various coolants (gaseous and/or liquid) may be pumped from the outside of the storage volume through the at least one cooling pipe 21 for temperature control (cooling and/or heating).

By means of one or more of the devices 100 described herein, the gas phase of the hydrogen stored in a storage volume or storage tank, and thus the pressure in the storage volume or storage tank, can be controlled by utilizing the temperature dependent storage capacity of the adsorbent material 13. Thereby, it is possible to both speed up a refueling process and reduce losses during refueling. In addition, the device 100 or a group of devices 100 can be actively used during hydrogen storage to reduce storage losses (boil-off), as well as for safety-related control and system adaptation for hydrogen extraction in dynamic situations.

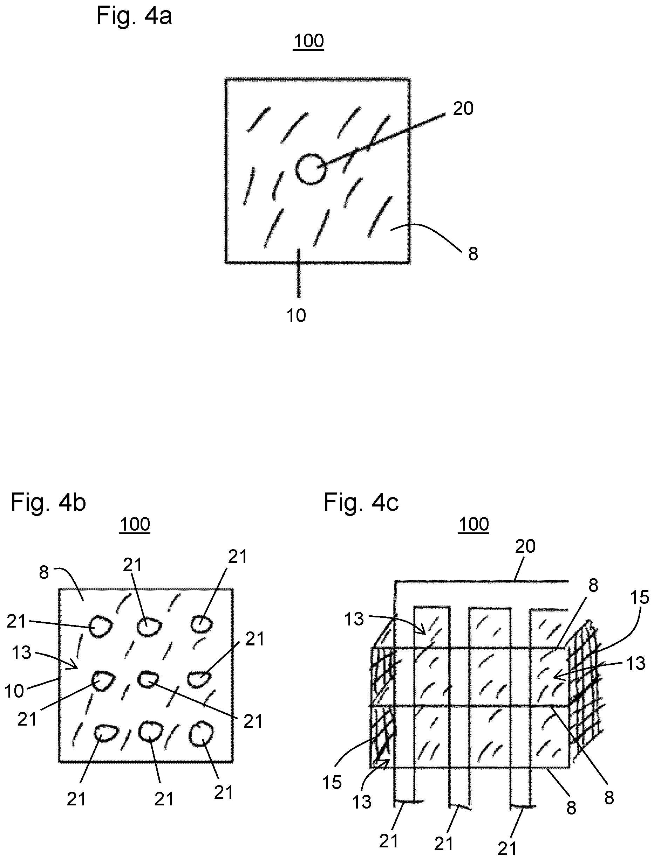

**Fig. 4a** shows a schematic representation of a device 100 according to another exemplary embodiment of the invention in a top view. According to this embodiment, the adsorption means 10 of the device 100 comprise one or more panels 8 with a rectangular cross section. In particular, the one or more panels 8 are circular plates or disks, e.g. made of copper or any other material with a high heat conductivity.

**Fig. 4b** shows a schematic representation of a device 100 according to another exemplary embodiment of the invention in a top view. According to this embodiment, the device 100 and/or the temperature controlling means 20 of the device 100 comprises/comprise a plurality of cooling pipes 21, e.g. nine cooling pipes 21. The cooling pipes 21 pass through the adsorption means 10, particularly through the one or more panels 8 of the adsorption means 10. As illustrated in Fig. 4b, the adsorption means 10 and/or the panels 8 may have a rectangular cross section. However, it is to be understood that the adsorption means 10 and/or the panels 8 may have any other cross section, such as a circular cross section as shown in Fig. 1c.

A perspective view of the exemplary embodiment of Fig. 4b is illustrated in **Fig. 4c****.** For the sake of convenience, only three of the nine colling pipes 21 of Fig. 4b are shown in Fig. 4c. The cooling pipes 21 are connected by a common supply and/or return pipe. In the example of Fig. 4c, the device comprises three panels 8. Two adjacent panels are respectively connected by a grid or mesh 15 to form a grid box or mesh box. In each such mesh box, adsorbent material 13 is included.

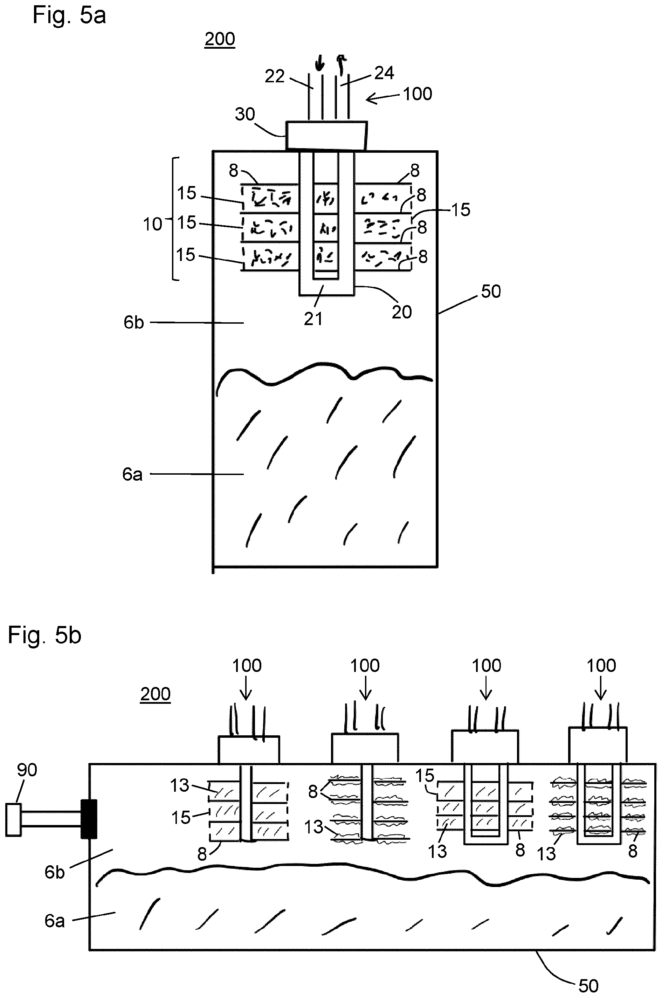

**Fig. 5a** shows a schematic representation of a storage system 200 for hydrogen according to an exemplary embodiment of the present invention. The hydrogen storage system 200 comprises a hydrogen storage container 50 and one device 100. The device 100 comprises adsorption means 10 (comprising a plurality of panels 8 and meshes 15 between adjacent panels 8) and temperature controlling means 20. The temperature controlling means 20 comprise a supply line 22 for introducing a coolant into a cooling pipe 21 and a return line 24 for returning the coolant from the cooling pipe 21. Accordingly, in this embodiment, the temperature controlling means 20 comprise a hydraulic system. The device 100 is fixed by means of a flange 30 to the storage container 50, such that the adsorption means 10 are arranged within a storage volume of the storage container 50. The storage volume comprises hydrogen in a liquid phase 6a and a gaseous phase 6b.

**Fig. 5b** shows a schematic representation of a storage system 200 according to another exemplary embodiment of the present invention. According to this embodiment, the system 200 comprises four devices 100. Each device 100 is fixed by means of a flange 30 to the storage container 50, such that the adsorption means 10 of each device 100 are arranged within a storage volume of the storage container 50. As shown in Fig. 5b, the devices 100 comprised in the system 200 may relate to different embodiments (particularly in view of adsorption means and temperature controlling means). However, it is to be understood that all devices 100 comprised in the system 200 may be identical, i.e. all devices 100 comprised in the system 200 may relate to one and the same embodiment. Each device 100 comprises adsorbent material 13 which may be arranged on surfaces of heat-conducting panels 8 and/or in spaces between the heat-conducting panels 8, wherein the spaces are defined by one or more heat-conducting grids 15. As in the embodiment of Fig. 5a, also the storage volume of the embodiment shown in Fig. 5b comprises hydrogen in a liquid phase 6a and a gaseous phase 6b. Moreover, the storage container 50 comprises a filling port 90 for filling liquid hydrogen into the storage container 50. It is noted that although not explicitly shown in Fig. 5a, also the storage container 50 according to the embodiment of Fig. 5a may comprise such a filling port 90.

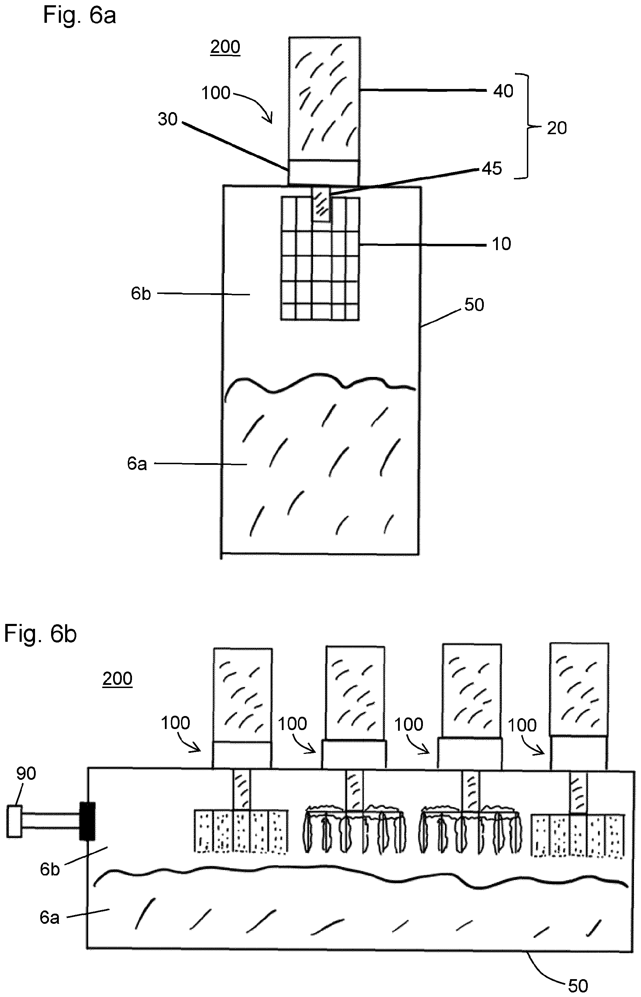

**Fig. 6a** shows a schematic representation of a hydrogen storage system 200 according to a further exemplary embodiment of the present invention. As in the embodiment shown in Fig. 5a, the hydrogen storage system 200 comprises a hydrogen storage container 50 and a device 100. The device 100 comprises adsorption means 10 and temperature controlling means 20. **Fig. 6b** shows a schematic representation of a storage system 200 according to another exemplary embodiment of the present invention. As in the embodiment of Fig. 5b, the system 200 comprises four devices 100. However, the embodiments of Figs. 6a and 6b differ from the embodiments of Figs. 5a and 5b in that the temperature controlling means 20 are realized by a cold head 45. The cold head 45 is operated by a compressor 40. Thus, the temperature controlling means 20 may comprise a cold head 45 which particularly includes a compressor 40. It is to be understood that the temperature controlling means 20 may also comprise a combination of a hydraulic system as illustrated in Figs. 5a and 5b and a cold head 45 as illustrated in Figs. 6a and 6b.

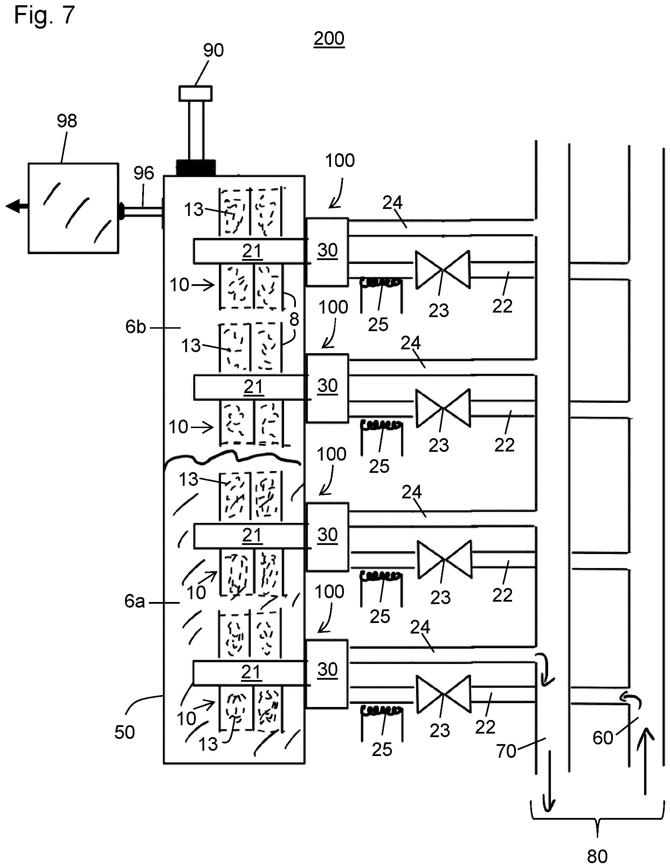

**Fig. 7** shows a schematic representation of a storage system 200 according to another exemplary embodiment of the present invention. Like in Fig. 5b, the system 200 according to Fig. 7 comprises four devices 100. Each device 100 is fixed by means of a flange 30 to the storage container 50, such that the adsorption means 10 of each device 100 are arranged within a storage volume of the storage container 50. Other than in the embodiments of Figs. 5a and 5b, where the devices 100 are arranged on an upper wall of the hydrogen storage container 50, in the embodiment of Fig. 7 the devices 100 are arranged on a sidewall of the hydrogen storage container 50. The storage volume comprises hydrogen in a liquid phase 6a and a gaseous phase 6b. In the embodiment of Fig. 7, the adsorption means 10 of some of the devices 100 are located in the hydrogen liquid phase 6a region, while the adsorption means 10 of the remaining devices 100 are located in the hydrogen gaseous phase 6b region. Each of the temperature controlling means 20 of the devices 100 comprises a cooling pipe 21, a supply line 22 and a return line 24. Each of the temperature controlling means 20 further comprises a valve 23 for controlling a flow rate of a coolant. Thus, the valves 23 serve to control the cooling of the individual devices 100. The valves 23 are arranged outside of the storage container 50. In the example shown in Fig. 7, the valves 23 are arranged in the supply line 22. Each of the temperature controlling means 20 further comprises a heater 25 that is configured and arranged to heat the adsorption means 20. In the example illustrated in Fig. 7, the heaters 25 are arranged at or nearby the supply line 22. Accordingly, the heaters 25 serve to heat the coolant, and via the coolant (indirectly) also the adsorption means 20 and/or the adsorbent material 13. Each of the supply lines 22 is connected to a common supply line 60. Each of the return lines 24 is connected to a common return line 70. The common supply line 60, the supply lines 22, the cooling pipes 21, the return lines 24, and the common return line form a coolant circuit 80. In particular, the coolant circuit 80 is part of the hydrogen storage system 200. The coolant circuit 80 may be a closed circuit. On an upper wall of the hydrogen storage container 50, a filling port 90 is arranged for filling the storage container 50 with (liquid) hydrogen. Moreover, the storage container 50 comprises an outlet 96 for discharging hydrogen from the storage container 50. By means of a safety valve 98 (pressure relief valve) arranged at the outlet 96, an overpressure inside the storage container 50 can be prevented. The storage container 50 filled with liquid hydrogen withstands a maximum pressure during the storage time, which is specified by the pressure relief valve.

In the hydrogen storage container 50, a filling level sensor (not shown in Figs. 5a, 5b, 6a, 6b and 7) may be installed. Depending on a filling level of liquid hydrogen 6a, the adsorption means 10 (and particularly the panels 8 with adsorbent material 13) may be in contact with hydrogen gas 6b and/or with liquid hydrogen 6a. Each device 100 may be actuated and/or controlled (e.g. by cooling and/or heating the adsorption means 10 and/or the adsorbent material 13) based on the filling level of liquid hydrogen. A temperature of the adsorption means 10, and thus a temperature of the adsorbent material 13, can be controlled by means of the temperature controlling means 20 of the devices 100. It is noted that instead of four devices as shown in Fig. 7, the system 200 may comprise less or more of four devices 100. In particular, the system 200 may be a modular system, wherein one or more devices 100 can modularly be mounted on the storage container 50.

In particular, the invention provides a storage concept based on cryosorption for extending storage time in liquid hydrogen storage systems. The storage container 50 may be a conventional cryogenic container with an evacuated space between an outer and inner container.

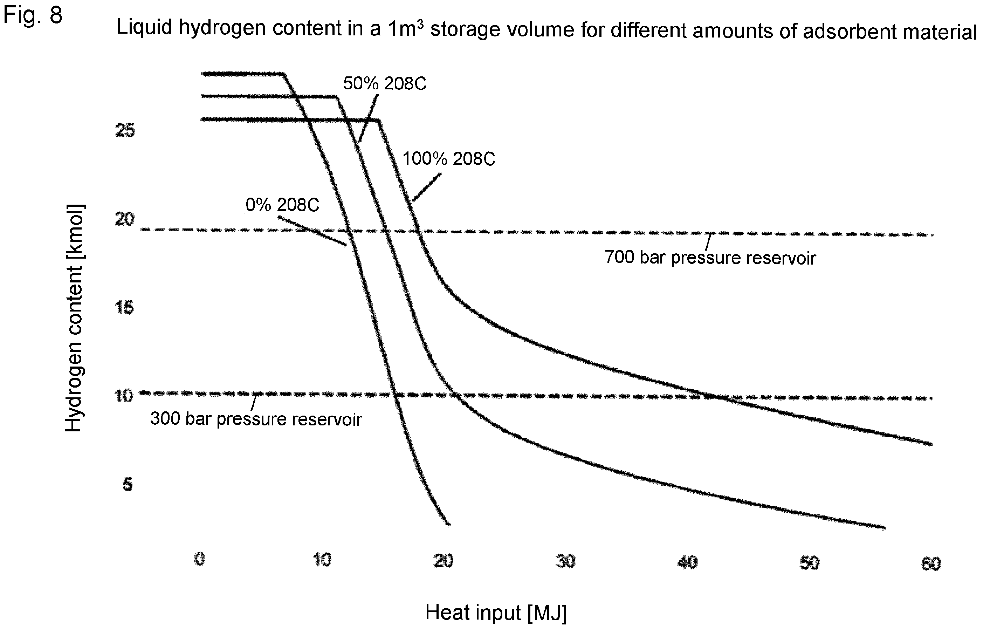

In **Fig. 8****,** a simulation of the liquid hydrogen content in dependence on heat input in a 1 m³ storage volume for different amounts of adsorbent material present in the storage volume is shown. As adsorbent material, active carbon 208C is used for the simulation. This simulation illustrates the influence of the adsorbent material on the extension of storage time in liquid hydrogen storage. Assuming that time is proportional to the heat input, it is clear from the diagram shown in Fig. 8 that the rest time increases significantly with the amount of activated carbon. For example, a storage tank which is completely or maximally filled with activated carbon (see the curve labeled with "100% 208C" in Fig. 8) results in a rest time that is more than twice than the rest time of a conventional liquid hydrogen storage tank (without adsorbent material, (see the curve labeled with "0% 208C" in Fig. 8). The evaporation rate is constant for all storage tanks (irrespective of the amount of adsorbent material) after the start of evaporation, but levels off earlier with a larger amount of activated carbon 208C, so that the completely filled storage tank still has the storage density of a 300 bar pressure storage tank after twice the time in which the conventional liquid hydrogen storage tank only has 10% of its initial capacity. By varying the amount of activated carbon, a balance can be found between maximum storage capacity and extended rest time as well as reduced evaporation losses.

It should be noted that filling the storage tank with activated carbon leads to a weight increase of around 50%, which is a decisive factor in mobile applications and significantly reduces the gravimetric density of the storage system. Another important factor is the adsorption enthalpy and the activated carbon, which must be additionally cooled when refueling, which leads to high losses during refueling and thus to longer refueling times. In a liquid hydrogen tank, the loss due to so-called cold running is 100% of the hydrogen filled into the tank for warm components, and between 20% and 30% for components that are already cold. When operating cold gas storage tanks, care is preferably taken to ensure that the tanks are never completely emptied. This keeps the system cold and there are fewer refill losses.

For the 1 m³ storage system with activated carbon, the adsorption enthalpy to be cooled according to the used model is 22,8 MJ, and the cooling of the activated carbon from 77 K to storage temperature (20,28 K) is 21,78 MJ. If cooling via the evaporation enthalpy of hydrogen is considered, 25,19 kmol are required to cool the adsorption enthalpy and 24,06 kmol to cool the activated carbon, which together correspond to almost 160% of the maximum storage capacity of the storage concept with activated carbon. This also shows that the heat capacity of activated carbon contributes to the extension of the rest time. In summary, it can be said that the significant increase in the rest time and the reduction in evaporation losses in liquid hydrogen storage systems by the use of activated carbon could lead to possible fields of application in which, despite the higher charging losses, lower densities and additional weight, the considerable advantages outweigh the disadvantages. Liquid hydrogen storage is already used on a large scale in both stationary and mobile applications. A cost-effective and simple modification to improve liquid hydrogen storage is provided by activated carbon and could be of particular interest for applications where the relevance of the extended storage time outweighs the gravimetric energy density.

The present invention particularly exploits the beneficial effects of adsorbent material present in a hydrogen storage tank. In particular, the present invention exploits the temperature dependence of the storage capacity of adsorbent material and thereby makes the storage of hydrogen not only more effective but also more controllable. For example, by the temperature controlling means described herein, the hydrogen storage tank can be cooled before and during refueling to reduce charging times and charging losses, but also to cool it continuously during storage of the hydrogen. Moreover, the hydrogen storage tank can be heated by the temperature controlling means, which can be used for desorption and/or dynamic requirements.

### List of Reference Numerals

- 6a: liquid hydrogen (liquid phase of hydrogen)
- 6b: gaseous hydrogen (gaseous phase of hydrogen)
- 8: copper plate (panel)
- 10: adsorption means
- 13: adsorbent material (adsorbent)
- 15: mesh
- 20: temperature controlling means
- 21: cooling pipe
- 22: supply line (supply header)
- 23: valve
- 24: return line (return header)
- 25: heater
- 28: outer cooling pipe
- 30: fixation means
- 40: compressor
- 45: cold head
- 50: storage container
- 60: common supply line
- 70: common return line
- 80: coolant circuit
- 90: filling port
- 96: outlet
- 98: safety valve
- 100: device
- 200: hydrogen storage system

## Claims

1. A device (100) for being used with a hydrogen storage container (50) and/or for controlling a gaseous phase of hydrogen (6b) being stored in the storage container (50), comprising:
- adsorption means (10) comprising adsorbent material (13), the adsorbent material (13) being configured to adsorb hydrogen; and
- temperature controlling means (20) configured to control a temperature of the adsorption means (10) and/or the adsorbent material (13).

2. The device (100) according to claim 1, further comprising
- fixation means (30) configured to fix the device (100) to the storage container (50), particularly in a fluid-tight manner.

3. The device (100) according to claim 2, wherein the fixation means (30) are configured and/or arranged such that, in a fixed position, the adsorption means (10) are arranged within a storage volume of the storage container (50).

4. The device (100) according to any one of the preceding claims, wherein:
the adsorption means (10) comprise a plurality of heat-conducting panels (8), and
the adsorbent material (13) is particularly arranged on one or more surfaces of the panels (8) and/or in one or more spaces between adjacent panels (8).

5. The device (100) according to claim 4, wherein:
the adsorbent material (13) is fixed on one or more surfaces of the panels (8); and/or
the adsorbent material (13) is arranged in one or more spaces each of which is defined by a heat-conducting mesh (15) that connects two adjacent panels (8), the mesh (15) being preferably made of copper.

6. The device (100) according to any one of the preceding claims, wherein:
the temperature controlling means (20) comprise at least one cooling pipe (21) configured to receive and/or transport one or more coolants; and/or
the temperature controlling means (20) comprise at least one cold head (45).

7. The device (100) according to any one of the preceding claims,
wherein the temperature controlling means (20) comprise at least one valve (23) for controlling a flow rate of a coolant.

8. The device (100) according to any one of the preceding claims,
wherein the temperature controlling means (20) further comprise at least one heater (25) that is configured and arranged to heat the adsorption means (20) and/or the adsorbent material (13), wherein the at least one heater (25) is particularly an electrical heater.

9. A storage system (200) for hydrogen, comprising
- a hydrogen storage container (50); and
- at least one device (100) according to any one of the preceding claims.

10. The storage system (200) according to claim 9,
wherein the at least one device (100) is fixable or fixed to the storage container (50), particularly in a fluid-tight manner, such that the adsorption means (10) are arranged within a storage volume of the storage container (50).

11. The storage system (200) according to claim 9 or 10, wherein:
each of the temperature controlling means (20) of the least one device (100) comprises at least one valve (23) for controlling a flow rate of a coolant, and
the at least one device (100) is fixable or fixed to the storage container (50) such that the at least one valve (23) is arranged outside of the storage container (50).

12. The storage system (200) according to any one of claims 9 to 11, comprising at least two devices (100) according to any one of claims 1 to 8.

13. A method for controlling a gaseous phase of hydrogen (6b) being stored in a storage volume for hydrogen, the method comprising:
- setting a temperature of adsorbent material (13), the adsorbent material (13) being arranged within the storage volume and configured to adsorb hydrogen.

14. The method according to claim 13, comprising:
- providing a storage system (200) according to any one of claims 9 to 13; and
- for each of the at least one device (100) of the storage system (200), setting a temperature of the adsorbent material (13) by means of the temperature controlling means (20).

15. The method according to claim 14, wherein the method comprises prior to the temperature setting step:
- fixing the at least one device (100) to a storage container (50) comprising the storage volume, particularly in a fluid-tight manner, such that the adsorption means (10) of the at least one device (100) are arranged within the storage volume.
